# EUROPEAN PATENT SPECIFICATION

(11) **EP 3 087 320 B1**
(45) Date of publication and mention of the grant of the patent: **17.04.2019**
(21) Application number: 14816285.2
(22) Date of filing: 22.12.2014
(51) Int. Cl.: F23N 1/00, F24C 3/12, F16K 35/04, G05G 1/08

(54) **A COOKING APPLIANCE WHICH INCLUDES A GAS TAP EQUIPPED WITH A TACTILE FEEDBACK DEVICE**
KOCHVORRICHTUNG UMFASSEND EINEN GASHAHN MIT EINER VORRICHTUNG MIT TAKTILER RÜCKMELDUNG
APPAREIL DE CUISSON COMPRENANT UN ROBINET DE GAZ ÉQUIPÉ D'UN DISPOSITIF DE RETOUR TACTILE

(30) Priority: 24.12.2013 TR 201315134
(43) Date of publication of application: 02.11.2016
(73) Proprietor: BSH Hausgeräte GmbH, 81739 München (DE)
(72) Inventor: BAGIS, Ercan, 59510 Tekirdag (TR); ERBAY, Metin, 59510 Tekirdag (TR); GÖNEN, Ergin, 59860 Tekirdag (TR); SENGÜN, Hakan, 59500 Tekirdag (TR)
(86) International application number: PCT/EP2014/078941
(87) International publication number: WO 2015/097119

(56) References cited:
- AU-B2- 444 986
- FR-A3- 2 690 226
- FR-A5- 2 122 095
- GB-A- 682 095
- US-A- 4 723 567

## Description

The invention concerns gas cooker appliances equipped with a gas tap by which gas flow adjustment can be carried out manually between a minimum and a maximum value, especially gas hobs.

Gas taps used in cooking appliances have a rotating drive shaft which adjusts the gas flow passing through the gas tap, and a flow control element entry to which the shaft is coupled. The shaft is directly connected to a button on the front panel of the cooking appliance. The rotating of the shaft for gas flow adjustment is provided by rotating a button.

One of the arrangements for gas taps in the current state of the art can be seen in patent publication number EP1672279A1. A bar adapted so that it can slide axially on a level with the shaft in the gas tap forms the gas control element within a recess. One end of the bar presses on the second inner end of the shaft. A second end of the bar is in contact with a first conical surface which bears upon an inclined plane. The shaft partially enters the flow control element and is equipped with a first outer end into which a control button passes and a second inner end connected to the first end of the bar. There is a spring between the flow control element and the first end of the bar, and by means of the bar, it pushes the shaft into an inactive axial position, pushing on the first outer end of the shaft.

Another gas tap in the current state of the art may be seen in patent publication number US2005284519. A manual gas tap for a cooking appliance is of the type with a conical adjustment entry which adjusts the gas flow. It is located in a central recess in the tap body and is coupled to a rotating drive shaft. A tap cover closes off the central recess. A transverse pin ensures the rotation of the rotating shaft to a two interval position which corresponds to the highest and lowest flows of gas, and to an intermediate locking position depending on the gas feed. The tap cover is in the form of a tubular bush shroud, and includes a gasket base with a sliding surface within a circular circlip with many notches on it. The circular circlip notches are in frictional contact with a transverse pin, thus creating a tactile and auditory effect.

Prior art document FR 2 122 095 A5 discloses a control mechanism for gas taps with at least two working positions, for example a grill position and a baking oven position. For switching between the working positions a shaft, which extends into a tap body of a gas tap, is moved in axial direction. The control mechanism comprises a tactile feedback device indicating the switch of the working positions of the gas tap. The tactile feedback is housed by a recessed element.

Moreover, a cooking device comprising a gas tap with a tactile feedback device is disclosed in prior art document FR 2 690 226 A3. The tactile feedback device is housed by a recessed element and fixed to said recessed element. Rods are connecting the tactile feedback device with a button for regulating the flow of gas. Said button is connected to a shaft extending from the button into a tap body of a gas tap.

To provide a compact gas flow control valve, in particular for medical requirements, which allows definite, positive selection only of a desired one of a plurality of available flow rates, precluding inaccurate or indefinite settings, in operative selector positions, prior art document US 4 723 567 A discloses a gas flow control valve comprising a follower, which extends radially toward the shaft, adjusted so that it grips an exterior section of the shaft of the gas tap. Said follower includes a recessed element with a recess in which an elastic element and a detent are positioned.

A cooking appliance according to the preamble of claim 1 is disclosed in prior art document AU 444 986 B2. Said cooking appliance comprises a gas valve having a single on condition and several desired gas flow conditions. For providing a positive indexing of the valve member at the desired positions the cooking appliance comprises a tactile feedback device. Said tactile feedback device comprises a pair of cam follower rollers being carried by levers. Helical tension springs are hooked between the levers so as to bias them toward one another and thereby force the cam follower rollers into firm engagement with a star-shaped cam plate fitted to the valve stem. The purpose of the invention is to provide detachable modular elements on a gas tap which provide a sense of tactile feedback.

This and other objects are achieved by a cooking appliance according to the appended claim 1. Further detailed characteristics and advantages are described in the dependent claims. Thus is introduced a tactile feedback device which can be mounted on or demounted from the gas tap without altering the existing structure of the gas tap of the cooking appliance and which provides a sense of the gas flow level.

In one possible embodiment of the invention, the tactile feedback device can be attached to or detached from the gas tap shaft. Thus, it may be attached or detached to an external section of the gas tap of the cooking appliance, providing a tactile feedback device of modular structure.

In one possible embodiment of the invention, the sleeve includes upon it a multiplicity of sequential depressions which provide guidance for the follower. Thus the follower can be operated providing a sense of tactile feedback.

In one possible embodiment of the invention, the depressions are each a groove in a periphery of the sleeve. Thus, as the follower enters and exits the depressions in its forward and backward movements, it provides a sense of tactile feedback.

In one possible embodiment of the invention, the sleeve is formed in such a way as to enclose a peripheral section of the exterior part of the shaft. Thus, the guidance section which is rotated by the shaft, which rotates with the rotating motion of the button, has the freedom to move throughout a full circle of 360°.

In one possible embodiment of the invention, the sleeve includes a fixing aperture which fixes the sleeve to the shaft by corresponding to the form of the exterior section of the shaft. Thus the sleeve is fixed on the shaft.

In one possible embodiment of the invention, the follower, a cylindrical element of suitable configuration permitting it to move over the depressions on the guidance section in particular. This ensures that the follower can move effectively and easily. In possible embodiments of the invention, the depressions are in the form of a semicircular groove, channel or projection, so that the cylindrical element of the follower can easily move over the depressions.

In one possible embodiment of the invention, the follower includes an elastic element which permits the cylindrical element to compress and extend, and thereby move backwards and forwards. Thus, the cylindrical element may travel a certain distance within a certain range of tolerance during level adjustment. The elastic element may be a spring or material with elastic capability.

In one possible embodiment of the invention, the follower includes a recessed element with a recess which accommodates the cylindrical element and the elastic element. This provides support from a location for the cylindrical and elastic elements of the follower.

In one possible embodiment of the invention, the recessed element positioned within the follower has been fixed on the recessed element of the tactile feedback device. Thus, by partially attaching the follower to the tactile feedback device, support is provided from the recessed element.

In one possible embodiment of the invention, the recessed element of the tactile feedback device has been fixed within the cooking appliance. Thus, the fixing, albeit partial, of the tactile feedback device within the cooking appliance, permits the mechanism of the tactile feedback device to operate. Thus, when the shaft and the sleeve attached to the shaft is moving, the recessed elements are held in a fixed position. This ensures that the follower receives support from a point and travels over the depressions.

In one possible embodiment of the invention, the primary cover includes a clip projection which clips to the second cover. The clip projection can be formed around the periphery of the primary cover.

In one possible embodiment of the invention, the secondary cover includes a clip projection which permits it to be clipped to the primary cover. The clip projection may be formed around the periphery of the secondary cover.
- Figure 1a: shows a perspective view of a tactile feedback device which is the subject of the invention with a primary cover removed.
- Figure 1b: is a cross section view taken from the tactile feedback device shown in Figure 1a.

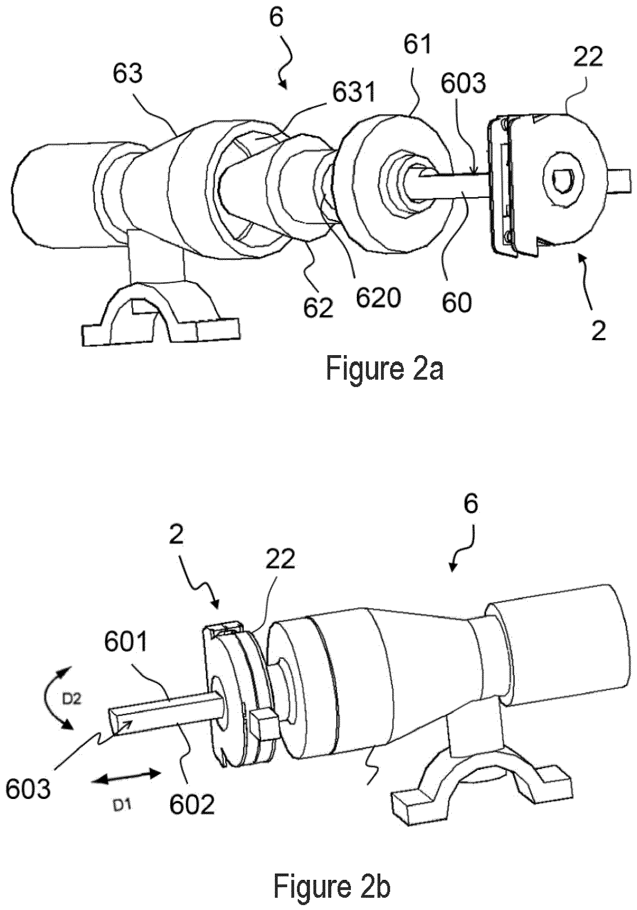

- Figure 2a: shows a perspective view of a tactile feedback device which is the subject of the invention with a gas tap removed.
- Figure 2b: shows a perspective view of a tactile feedback device fitted to a gas tap.

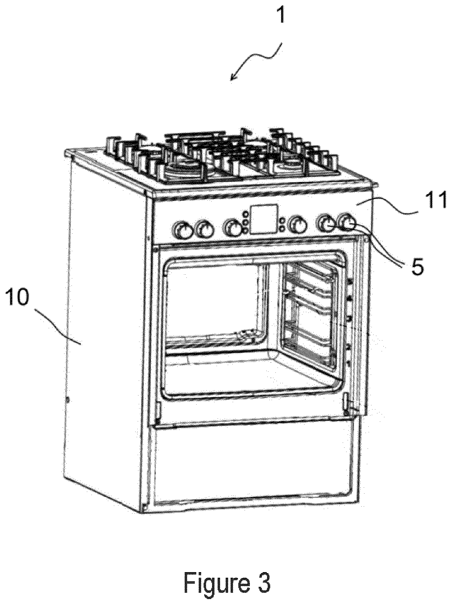

- Figure 3: is a perspective view from the front of a cooking appliance fitted with the gas tap which is the subject of the invention.

The invention concerns a cooking appliance (1) which includes a gas tap (6) equipped with an integrated tactile feedback device (2) which provides effective perception of gas follower (20) and sleeve (21) are positioned within the recessed element (22). The recessed element (22) is produced by bringing the primary cover (221) and a secondary cover (222) together. For this purpose a clipping projection (2211) on the primary cover (221) and a clipping projection (2221) on the secondary cover (222) clip together. The clipping projections (2211, 2221) are formed more or less along the peripheries of the covers (221, 222). In the central section of each cover (221, 222) is formed a shaft opening (2210, 2220) to permit the shaft (60) to pass through the center of it.

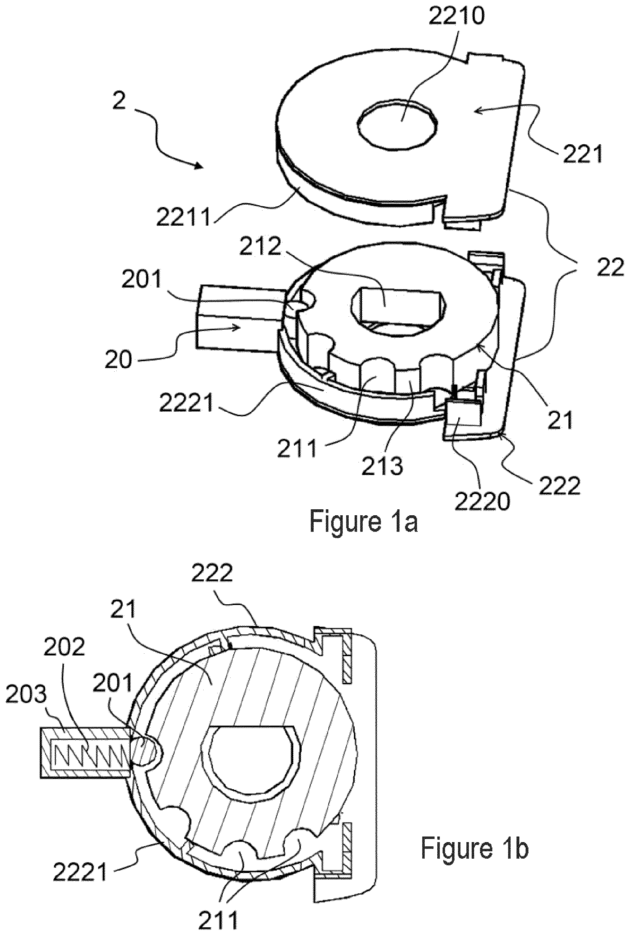

A recessed element (203) of the follower (20) is formed on the recessed element (22) and is integral with a secondary cover (222). The recessed element (203) may be a hollow cylindrical or rectangular prism. An elastic element (202) and a cylindrical element (201) in contact with the elastic element (202) are positioned within the recessed element (203). As may be seen from Figures 1a and 1b, the cylindrical element (201) is in contact with the sleeve (21). Depressions (211) are formed in a sequential manner on a periphery (213) of the sleeve (21) pointing inward to the center. The depressions (211) have been created to match the rotating tolerance of the button (5). The follower (20) is positioned so that it extends in a radial fashion toward a periphery (213) of the sleeve (21). The sleeve (21) moves together with the shaft (60). In order to achieve this, the shaft (60) passes through a fixing aperture (212) of the sleeve (21). A periphery of the exterior section (603) of the shaft (60) comprises a flat section (601) and a semicircular section (602), and may be said to be in the form of a letter 'D'. The fixing aperture (212) of the sleeve (21) is formed in a shape resembling the letter 'D' in order for it to firmly fit over the shaft (60). The flat section (601) acts as a key in order to ensure that the sleeve (21) is held in a fixed position on the shaft (60).

The tactile feedback device (2) is fixed on the cooking appliance (1) over the recessed element (22). In order to achieve this, the recessed element (22) is fitted to the cooking appliance (1) with a fixing plate (not shown in the figure). Thus, when the sleeve (21) moves within the recessed element (22), the recessed element (22) is fixed within the cooking appliance (1).

Each of the sequential depressions (211) may take the form of a channel, groove or peripheral projection which fit the shape of the cylindrical element (201) or follower (20). A section of the cylindrical element (201) which extends toward the periphery (213) of the sleeve (21) is semicircular in shape, and therefore the channel or grooves are also semicircular in cross section.

There follows a more detailed account of the operation of the invention. The button (5), which is pushed in direction D1 and rotated in direction D2 in the course of adjusting and switching the gas flow on and off, also turns the shaft (60) of the gas tap (6). Meanwhile, a sleeve (21) of the tactile feedback device (2) fitted to the exterior section (603) of the shaft (60) turns together with the shaft (60). Gas flow adjustment and direction is provided by the flow control element (62). Simultaneously, the tactile feedback device (2) permits the levels of gas flow to be perceived by feedback with the rotation of the shaft (60) which is acted upon by the button (5). To this end, a follower (20) extending radially toward a sleeve (21) advances over depressions (211) on the sleeve (21) with the rotation of the button (5). The advancing of the follower (20) over the depressions (211) is as follows: if the cylindrical element (201) follower (20) is in one of the depressions (211) of the sleeve (21), as shown in Figure 1a, when the shaft (60) is rotated, with the force applied by the sleeve (21) on the cylindrical element (201), the elastic element (202) flexes and, moving over a periphery (213) of the sleeve (21) of the cylindrical element (201), enters the recessed element (203), and as the rotating of the shaft (60) continues, it ensures that it enters the next depression (211). In this way the cylindrical element (201) progresses with backward and forward movements over the said depressions (211) on the periphery (213) of the sleeve (21). During the said progress, each time the follower (20) enters into and leaves the depressions (211), the user effectively feels the sensation of a level. Thus the user, when switching the hob on, is effectively in control of the gas adjustment.

In order to provide effective feedback perception between the levels of gas flow adjustment, the depth of each depression (211) forms approximately one radius of the circular end of the cylindrical element (201) of the follower (20) which is in contact with the sleeve (21).

The follower (20) must be supported in the forward and backward movements of the cylindrical element (201), which may be also be described as up and down movements. A recessed element (203) into which the follower (20) can be located serves this purpose. The recessed element (203) is basically a rectangular prism form with one end open and the other end closed. The cylindrical element (201) is in the form of a cylindrical ball, while the elastic element (201) is a spring.

In alternative embodiments of the invention, the depth of the depressions (211) may become progressively deeper. Thus the user, when turning the button (5) in rotation direction D2, will sense increasing difficulty in rotating the button (5) as the quantity of gas changes.

In alternative embodiments of the invention, the situation may be reversed and the depth of the depressions (211) may be progressively reduced. That is, the user, when rotating the button (5) in direction D2, will feel progressively easier rotation of the button (5) as the quantity of gas changes.

In another possible embodiment of the invention, the cylindrical element (201) of the follower (20) may be a pin, while the elastic element (202) may be an elastic material which serves to project the pin and permit it to return as required.

In an alternative embodiment of the invention, in order to permit the follower (20) to travel with gentle movements over the sleeve (21), the depressions (211) may take the form of a projection and the diameter of the depressions (211) may be smaller than the diameter of the part of the follower (20), the cylindrical element (201), for example, with which they come into contact.

The follower (20) may be a mechanical friction element, or a magnetic element.

In an alternative embodiment of the invention, the tactile feedback device (2) may include magnetic elements.

**REFERENCE NUMBERS**

| | | | |
|---|---|---|---|
| 1. | Cooking appliance | 5. | Button |
| 10. | Carcass | | |
| 11. | Front panel | 6. | Gas tap |
| | | 60. | Shaft |
| 2. | Tactile feedback device | 601. | Flat section |
| 20. | Follower | 602. | Semi-circular section |
| 201. | Cylindrical element | 603. | External section |
| 202. | Elastic element | | |
| 203. | Recessed element | 61. | Cover |
| | | | |
| 21. | Sleeve | 62. | Flow control element |
| 211. | Depression | 620. | Recess |
| 212. | Fixing aperture | | |
| 213. | Periphery | 63. | Tap body |
| | | 631. | Recess |
| 22. | Recessed element | | |
| 221. | Primary cover | D1: | Advance direction |
| 2210. | Shaft aperture | D2: | Rotation direction |
| 2211. | Clipping projection | | |
| 222. | Secondary cover | | |
| 2220. | Shaft aperture | | |
| 2221. | Clipping projection | | |

## Claims

1. A cooking appliance (1) which comprises a carcass (10), a front panel (11) on the carcass (10), a button (5) on the front panel (11), a flow control element (62) which regulates the flow of gas by the turning of a shaft (60) which is connected to the button (5) and is equipped with a gas tap (6) which has a tap body (63) with a hollow interior in which the flow control element (62) is accommodated, wherein the cooking appliance (1) includes a follower (20), which extends radially toward the shaft (60), adjusted so that it grips an exterior section (603) of the shaft (60) of the gas tap (6) and a tactile feedback device (2) with a guiding section which ensures the guidance of the follower (20) in order to provide adjustment with perception of gas adjustment levels by rotation of the button (5) and wherein the tactile feedback device (2) includes a sleeve (21) with a guide section which provides guidance for the follower (20), **characterized in that** the tactile feedback device (2) includes a recessed element (22) positioned within it permitting the sleeve (21) to move in a rotating motion, wherein a primary cover (221) and a secondary cover (222) are each covering the other to provide the recessed element (22), wherein the recessed element (22) provides a recess in which the sleeve (21) is housed, wherein the primary cover (221) includes a shaft aperture (2210) through which the shaft (60) passes and wherein the secondary cover (222) includes a shaft aperture (2220) through which the shaft (60) passes.

2. The cooking appliance (1) as claimed in claim 1, **characterized in that** the tactile feedback device (2) can be attached to or detached from the shaft (60) of the gas tap (6).

3. The cooking appliance (1) as claimed in claim 1 or 2, **characterized in that** the sleeve (21) includes upon it a multiplicity of sequential depressions (211) which provide guidance for the follower (20).

4. The cooking appliance (1) as claimed in claim 3, **characterized in that** the depressions (20) formed on a periphery (213) of the sleeve (21) are each in the form of a groove.

5. The cooking appliance (1) as claimed in any one of the previous claims, **characterized in that** the sleeve (21) is formed in such a way as to enclose a peripheral section of the exterior part (603) of the shaft (60).

6. The cooking appliance (1) as claimed in any one of the previous claims, **characterized in that** the sleeve (21) includes a fixing aperture (212) which fixes the sleeve (21) to the shaft (60) by corresponding to the form of the exterior section (603) of the shaft (60).

7. The cooking appliance (1) as claimed in any one of the previous claims, **characterized in that** the follower (20) includes a cylindrical element (201) in a suitable form that permits it to move over the depressions (211) on the guiding section.

8. The cooking appliance (1) as claimed in any one of the previous claims, **characterized in that** the follower (20) includes an elastic element (202) which permits the cylindrical element (201) to compress and extend, and thereby move backwards and forwards.

9. The cooking appliance (1) as claimed in any one of the previous claims, **characterized in that** follower (20) includes a recessed element (203) with a recess in which the cylindrical element (201) and the elastic element (202) are positioned.

10. The cooking appliance (1) as claimed in claim 8, **characterized in that** the recessed element (203) is fixed on the recessed element (22) of the tactile feedback device (2).

11. The cooking appliance (1) as claimed in claim 10, **characterized in that** the recessed element (22) is fixed within the cooking appliance (1)

12. The cooking appliance (1) as claimed in any one of the previous claims, **characterized in that** the primary cover (221) includes a clip projection (2211) which permits it to be clipped to the secondary cover (222).

13. The cooking appliance (1) as claimed in any one of the previous claims, **characterized in that** the secondary cover (222) includes a clip projection (2221) which permits it to be clipped to the primary cover (221).

## Patentansprüche

1. Kochgerät (1), das einen Korpus (10), eine Frontblende (11) am Korpus (10), einen Knopf (5) an der Frontblende (11), ein Durchflussregelelement (62) umfasst, das den Durchfluss von Gas durch Drehen einer mit dem Knopf (5) verbundenen Welle (60) reguliert, und mit einem Gashahn (6) ausgestattet ist, der einen Hahnkörper (63) mit einem hohlen Innenraum aufweist, in dem das Durchflussregelelement (62) untergebracht ist, wobei das Kochgerät (1) einen Nockenstößel (20) aufweist, der radial zur Welle (60) hin verläuft und so eingestellt ist, dass er einen äußeren Abschnitt (603) der Welle (60) des Gashahns (6) ergreift, und eine Tastrückmeldevorrichtung (2) mit einem Führungsabschnitt, der die Führung des Nockenstößels (20) gewährleistet und so ein Einstellen unter Wahrnehmung von Gaseinstellpegeln durch Drehen des Knopfes (5) ermöglicht, und wobei die Tastrückmeldevorrichtung (2) eine Hülse (21) mit einem Führungsabschnitt aufweist, der für eine Führung des Nockenstößels (20) sorgt, **dadurch gekennzeichnet, dass** in der Tastrückmeldevorrichtung (2) ein ausgenommenes Element (22) angeordnet ist, das es der Hülse (21) ermöglicht, sich in einer Drehbewegung zu bewegen, wobei eine erste Abdeckung (221) und eine zweite Abdeckung (222) sich jeweils gegenseitig abdecken und so das ausgenommene Element (22) bereitstellen, wobei das ausgenommene Element (22) eine Ausnehmung bereitstellt, in der die Hülse (21) aufgenommen ist, wobei die erste Abdeckung (221) eine Wellenöffnung (2210) aufweist, durch die die Welle (60) hindurchgeht, und die zweite Abdeckung (222) eine Wellenöffnung (2220) aufweist, durch die die Welle (60) hindurchgeht.

2. Kochgerät (1) nach Anspruch 1, **dadurch gekennzeichnet, dass** die Tastrückmeldevorrichtung (2) an der Welle (60) des Gashahns (6) angebracht oder davon getrennt sein kann.

3. Kochgerät (1) nach Anspruch 1 oder 2, **dadurch gekennzeichnet, dass** die Hülse (21) eine Vielzahl aufeinanderfolgender Vertiefungen (211) daran aufweist, die für eine Führung des Nockenstößels (20) sorgen.

4. Kochgerät (1) nach Anspruch 3, **dadurch gekennzeichnet, dass** die an einem Umfang (213) der Hülse (21) ausgebildeten Vertiefungen (20) jeweils die Form einer Nut aufweisen.

5. Kochgerät (1) nach einem der vorhergehenden Ansprüche, **dadurch gekennzeichnet, dass** die Hülse (21) so ausgebildet ist, dass sie einen Umfangsabschnitt des äußeren Abschnitts (603) der Welle (60) umgibt.

6. Kochgerät (1) nach einem der vorhergehenden Ansprüche, **dadurch gekennzeichnet, dass** die Hülse (21) eine Fixieröffnung (212) aufweist, die die Hülse (21) an der Welle (60) fixiert, indem sie der Form des äußeren Abschnitts (603) der Welle (60) entspricht.

7. Kochgerät (1) nach einem der vorhergehenden Ansprüche, **dadurch gekennzeichnet, dass** der Nockenstößel (20) ein zylinderförmiges Element (201) von geeigneter Form aufweist, so dass es sich über die Vertiefungen (211) an dem Führungsabschnitt bewegen kann.

8. Kochgerät (1) nach einem der vorhergehenden Ansprüche, **dadurch gekennzeichnet, dass** der Nockenstößel (20) ein elastisches Element (202) aufweist, das es dem zylinderförmigen Element (201) ermöglicht, zusammengedrückt und gedehnt zu werden und sich dadurch vor- und zurückzubewegen.

9. Kochgerät (1) nach einem der vorhergehenden Ansprüche, **dadurch gekennzeichnet, dass** der Nockenstößel (20) ein ausgenommenes Element (203) mit einer Ausnehmung aufweist, in der das zylinderförmige Element (201) und das elastische Element (202) angeordnet sind.

10. Kochgerät (1) nach Anspruch 8, **dadurch gekennzeichnet, dass** das ausgenommene Element (203) an dem ausgenommenen Element (22) der Tastrückmeldevorrichtung (2) fixiert ist.

11. Kochgerät (1) nach Anspruch 10, **dadurch gekennzeichnet, dass** das ausgenommene Element (22) in dem Kochgerät (1) fixiert ist.

12. Kochgerät (1) nach einem der vorhergehenden Ansprüche, **dadurch gekennzeichnet, dass** die erste Abdeckung (221) einen Klemmansatz (2211) aufweist, so dass sie sich an die zweite Abdeckung (222) klemmen lässt.

13. Kochgerät (1) nach einem der vorhergehenden Ansprüche, **dadurch gekennzeichnet, dass** die zweite Abdeckung (222) einen Klemmansatz (2221) aufweist, so dass sie sich an die erste Abdeckung (221) klemmen lässt.

## Revendications

1. Appareil de cuisson (1) qui comprend une carcasse (10), un panneau frontal (11) sur la carcasse (10), un bouton (5) sur le panneau frontal (11), un élément de commande de flux (62) qui régule le flux de gaz par la rotation d'une tige (60) qui est raccordée au bouton (5) et est équipée d'un robinet de gaz (6) qui a un corps de robinet (63) avec un intérieur creux dans lequel l'élément de commande de flux (62) est accueilli, dans lequel l'appareil de cuisson (1) inclut un élément suiveur (20), qui s'étend dans le sens radial en direction de la tige (60), ajusté de sorte qu'il se met en prise avec une section extérieure (603) de la tige (60) du robinet de gaz (6) et un dispositif de retour tactile (2) avec une section de guidage qui garantit le guidage de l'élément suiveur (20) afin de fournir un ajustement avec la perception de niveaux d'ajustement de gaz par rotation du bouton (5) et dans lequel le dispositif de retour tactile (2) inclut un manchon (21) avec une section de guidage qui fournit un guidage pour l'élément suiveur (20), **caractérisé en ce que** le dispositif de retour tactile (2) inclut un élément à renfoncement (22) positionné au sein de celui-ci permettant au manchon (21) de se déplacer dans un mouvement de rotation, dans lequel un capot principal (221) et un capot secondaire (222) couvrent chacun l'autre pour fournir l'élément à renfoncement (22), dans lequel l'élément à renfoncement (22) fournit un renfoncement dans lequel le manchon (21) est logé, dans lequel le capot principal (221) inclut une ouverture d'arbre (2210) à travers laquelle l'arbre (60) passe et dans lequel le capot secondaire (222) inclut une ouverture d'arbre (2220) à travers laquelle l'arbre (60) passe.

2. Appareil de cuisson (1) selon la revendication 1, **caractérisé en ce que** le dispositif de retour tactile (2) peut être relié à ou séparé de la tige (60) du robinet de gaz (6).

3. Appareil de cuisson (1) selon la revendication 1 ou 2, **caractérisé en ce que** le manchon (21) inclut sur lui une multiplicité de dépressions séquentielles (211) qui fournissent un guidage pour l'élément suiveur (20).

4. Appareil de cuisson (1) selon la revendication 3, **caractérisé en ce que** les dépressions (20) formées sur une périphérie (213) du manchon (21) se présentent chacune sous la forme d'une rainure.

5. Appareil de cuisson (1) selon l'une quelconque des revendications précédentes, **caractérisé en ce que** le manchon (21) est formé de telle manière qu'il renferme une section périphérique de la partie extérieure (603) de la tige (60).

6. Appareil de cuisson (1) selon l'une quelconque des revendications précédentes, **caractérisée en ce que** le manchon (21) inclut une ouverture de fixation (212) qui fixe le manchon (21) à la tige (60) en correspondant à la forme de la section extérieure (603) de la tige (60).

7. Appareil de cuisson (1) selon l'une quelconque des revendications précédentes, **caractérisé en ce que** l'élément suiveur (20) inclut un élément cylindrique (201) sous une forme appropriée qui lui permet de se déplacer sur les dépressions (211) sur la section de guidage.

8. Appareil de cuisson (1) selon l'une quelconque des revendications précédentes, **caractérisé en ce que** l'élément suiveur (20) inclut un élément élastique (202) qui permet à l'élément cylindrique (201) de se comprimer et de se déployer, et ainsi de se déplacer vers l'arrière et vers l'avant.

9. Appareil de cuisson (1) selon l'une quelconque des revendications précédentes, **caractérisé en ce que** l'élément suiveur (20) inclut un élément à renfoncement (203) avec un renfoncement dans lequel l'élément cylindrique (201) et l'élément élastique (202) sont positionnés.

10. Appareil de cuisson (1) selon la revendication 8, **caractérisé en ce que** l'élément à renfoncement (203) est fixé sur l'élément à renfoncement (22) du dispositif de retour tactile (2).

11. Appareil de cuisson (1) selon la revendication 10, **caractérisé en ce que** l'élément à renfoncement (22) est fixé au sein de l'appareil de cuisson (1).

12. Appareil de cuisson (1) selon l'une quelconque des revendications précédentes, **caractérisé en ce que** le capot principal (221) inclut une saillie de serrage (2211) qui lui permet d'être serré sur le capot secondaire (222).

13. Appareil de cuisson (1) selon l'une quelconque des revendications précédentes, **caractérisé en ce que** le capot secondaire (222) inclut une saillie d'accrochage (2211) qui lui permet d'être accroché au capot principal (221).
